# EUROPEAN PATENT APPLICATION

(11) **EP 3 276 493 A1**
(43) Date of publication of application: **31.01.2018**
(21) Application number: 16196268.3
(22) Date of filing: 28.10.2016
(51) Int. Cl.: G06F 11/36

(54) **METHOD AND SYSTEM FOR DEBUGGING AUTOMOTIVE APPLICATIONS IN AN ELECTRONIC CONTROL UNIT OF AN AUTOMOBILE**

(30) Priority: 29.07.2016 IN 201641026089
(71) Applicant: Wipro Limited, 560 035 Karnataka (IN)
(72) Inventor: HATI, Amitesh, 712203 West Bengal (IN); ROUT, Monisha, 700064 West Bengal (IN)
(74) Representative: Finnegan Europe LLP

(57) **Abstract**

Disclosed herein is method and system for debugging target automotive applications in an ECU of an automobile. A debug agent implemented in the ECU collects debugging information related to the target automotive applications and transmits it to an external computing system. The external computing system generates debugging instructions corresponding to debugging activities associated with the target automotive applications based on the debugging information and transmits the encoded debugging instruction to the debug agent. The debug agent decodes and forwards the decoded debugging instructions to a debug server in the ECU, which performs the debugging activities by executing the decoded debugging instructions, thereby debugging the target automotive applications. In an embodiment, the debug agent collects all vital information related to target automotive applications, hence, providing an effective method of diagnosing the target automotive applications. Further, the method also eliminates the need for taking the ECU out of the automobile during debugging.

## Description

### TECHNICAL FIELD

The present subject matter is related, in general to automobiles, and more particularly, but not exclusively to a method and system for debugging automotive applications in an electronic control unit of an automobile.

### BACKGROUND

In the automobile industry, an Electronic Control Unit (ECU) is an embedded electronic device. The ECU provides instructions for various electrical systems in the automobile, instructing them on what to do and how to operate depending on the nature and type of the automobile. Like any other computing device, the ECU is made of a set of hardware and software (firmware) that perform, control and monitor various operations of the automobile. However, the various components in the ECU eventually develop inconsistencies in the form of errors and bugs that may affect the overall performance of the automobile. Hence, it is very much necessary to conduct periodic diagnosis of the components in the ECU considering both the safety and economic concerns of the automobile.

But, once the ECU is in place in the automobile, it is almost impossible to debug the components in the ECU without taking the ECU out of the automobile. The need to take the ECU out of the automobile for debugging them requires a lot of effort and time for an engineer/tester to analyze a defect that occurs randomly in the automobile or in the post production assemblies. Further, any issue in the software and/or automotive applications in the ECU may result in catastrophic consequences as understanding the anomaly and rectifying them would become harder and time critical. Also, the situation could be more complex for a production build since most of the debug and log messages are turned off for a production build.

One of the existing methods suggests diagnosing the ECU in the automobile, without taking the ECU out of the automobile. The method involves connecting the ECU and/or a plurality of ECUs to an external computing system for diagnosing the ECUs. Here, the external computing system communicates with the ECUs using an On-Board Diagnostic (OBD) connector for diagnosing one or more issues in the ECU. However, possibility of getting deeper information from software is limited by the diagnostics capabilities which are normally kept at a bare minimum.

With the growing complexity of the automotive applications, the challenges mainly faced in debugging the automotive applications in the ECU of the automobile includes collecting vital internal debugging information for debugging the automotive applications using one or more debugging instructions obtained from an external computing system.

### SUMMARY

Disclosed herein is a method for debugging automotive applications in an Electronic Control Unit (ECU) of an automobile. The method comprises receiving, by a debug agent, a request for collecting debugging information related to one or more target automotive applications in the ECU. The debug agent is implemented within the ECU and is accessible over an On-board Diagnostic (OBD) service. Upon receiving the request, the debug agent collects the debugging information related to the one or more target automotive applications in the ECU. Further, the debugging information, collected from the one or more target automotive applications, are transmitted to an external computing system over supplier diagnostics services for analyzing the one or more target automotive applications. The debugging information transmitted to the external computing system is encoded as debugging response. One or more debugging instructions corresponding to one or more debugging activities associated with the one or more target automotive applications are received from the external computing system over the supplier diagnostics services. The one or more debugging instructions received from the external computing system are in an encoded form. Furthermore, the debug agent decodes each of the one or more debugging instructions for generating one or more decoded debugging instructions. Finally, a debug server in the ECU performs the one or more debugging activities associated with the one or more target automotive applications in the ECU based on the one or more decoded debugging instructions.

Further, the present disclosure relates to a debugging infrastructure used to debug automotive applications in an Electronic Control Unit (ECU) of an automobile. The debugging infrastructure may be an embedded computing environment that comprises a processing unit and a memory communicatively coupled to the processing unit. The memory stores executable instructions, which, on execution causes the processing unit to receive a request to collect debugging information related to one or more target automotive applications in the ECU. Upon receiving the request, the instructions further cause the processing unit to collect the debugging information related to the one or more target automotive applications in the ECU. Further, the debugging information is transmitted to an external computing system over supplier diagnostics services for analyzing the one or more target automotive applications. The debugging information transmitted to the external computing system is encoded as a diagnostics response. Furthermore, the processing unit receives one or more debugging instructions corresponding to one or more debugging activities associated with the one or more target automotive applications from the external computing system over the supplier diagnostics services. The one or more debugging instructions received from the external computing system are encoded as diagnostics requests, which are decoded by the processing unit to generate one or more decoded debugging instructions. Finally, the instructions cause the processing unit to perform the one or more debugging activities associated with the one or more target automotive applications in the ECU based on the one or more decoded debugging instructions.

The instructions of the debugging infrastructure may, on execution, further cause the processing unit to receive data associated with the one or more debugging instructions, wherein the data is utilized to perform the one or more debugging activities. The supplier diagnostic service may be configured to include services for debugging support from the external computing unit by facilitating execution of a debug session with a firmware installed within the ECU of the automobile. The debugging information may comprise at least one of internal state information, one or more state variables, program counter and stack information. The one or more debugging activities may include at least one of setting a breakpoint, reading and writing data into memory of each of the one or more target automotive applications. The debugging infrastructure may be configured to communicate with a debugger, implemented in the external computing system, using a Controller Area Network (CAN) bus adaptor. The CAN bus adaptor is interfaced between an OBD connector associated with the ECU and the external computing system. The instructions of the debugging infrastructure may, on execution, further cause the processing unit to modify memory of each of the one or more target automotive applications to debug the ECU. The debugging infrastructure may be further configured to debug each of the one or more target automotive applications (103) in each of one or more phases of production of the automobile. The one or more phases of production may include at least one of a pre-production phase and post-production phase.

The present disclosure need not be limited to the aforementioned configuration of an On-Board diagnostics (OBD) service and supplier diagnostics services. The present disclosure also provides a method for debugging automotive applications in an Electronic Control Unit (ECU) of an automobile, the method comprising: receiving, by a debug agent, a request for collecting debugging information related to one or more target automotive applications in the ECU, wherein the debug agent is implemented within the ECU, and wherein the debug agent is accessible over an diagnostic interface; collecting, by the debug agent, the debugging information related to the one or more target automotive applications in the ECU; transmitting, by the debug agent, the debugging information to an external computing system over the diagnostic interface for analyzing the one or more target automotive applications, wherein the debugging information is in an encoded form; receiving, by the debug agent, one or more debugging instructions corresponding to one or more debugging activities associated with the one or more target automotive applications from the external computing system over the diagnostic interface, wherein the one or more debugging instructions are in an encoded form; and decoding, by the debug agent, each of the one or more debugging instructions for generating one or more decoded debugging instructions; and performing, by a debug server in the ECU, the one or more debugging activities associated with the one or more target automotive applications in the ECU based on the one or more decoded debugging instructions. The diagnostic interface may comprise an On-Board diagnostics (OBD) service and/or an supplier diagnostics service, depending on the capability of the diagnostics services present in the automobile. The present disclosure also provides an apparatus (such as a debugging infrastructure) configured to perform the method, and a processor-readable medium comprising instructions for performing the method.

The foregoing summary is illustrative only and is not intended to be in any way limiting. In addition to the illustrative aspects, embodiments, and features described above, further aspects, embodiments, and features will become apparent by reference to the drawings and the following detailed description.

### BRIEF DESCRIPTION OF THE ACCOMPANYING DRAWINGS

The accompanying drawings, which are incorporated in and constitute a part of this disclosure, illustrate exemplary embodiments and, together with the description, serve to explain the disclosed principles. In the figures, the left-most digit(s) of a reference number identifies the figure in which the reference number first appears. The same numbers are used throughout the figures to reference like features and components. Some embodiments of system and/or methods in accordance with embodiments of the present subject matter are now described, by way of example only, and with reference to the accompanying figures, in which:
**FIG. 1** shows an exemplary environment illustrating various components of an Electronic Control Unit (ECU) of an automobile in accordance with some embodiments of the present disclosure;
**FIG. 2** shows a detailed block diagram illustrating communication between the ECU and an external computing system in accordance with some embodiments of the present disclosure;
**FIG. 3A** shows a flowchart illustrating an exemplary communication between the external computing system and the debug agent in the ECU in accordance with some embodiments of the present disclosure;
**FIG. 3B** shows an exemplary sequence diagram illustrating communication between the ECU and the external computing system in accordance with some embodiments of the present disclosure;
**FIGS. 4A** and **4B** show a flowchart illustrating a method for debugging one or more automotive applications in the ECU of the automobile in accordance with some embodiments of the present disclosure; and
**FIG. 5** illustrates a block diagram of an external computing system for performing various embodiments consistent with the present disclosure.

It should be appreciated by those skilled in the art that any block diagrams herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and executed by a computer or processor, whether or not such computer or processor is explicitly shown.

### DETAILED DESCRIPTION

In the present document, the word "exemplary" is used herein to mean "serving as an example, instance, or illustration." Any embodiment or implementation of the present subject matter described herein as "exemplary" is not necessarily to be construed as preferred or advantageous over other embodiments.

While the disclosure is susceptible to various modifications and alternative forms, specific embodiment thereof has been shown by way of example in the drawings and will be described in detail below. It should be understood, however that it is not intended to limit the disclosure to the particular forms disclosed, but on the contrary, the disclosure is to cover all modifications, equivalents, and alternative falling within the the scope of the disclosure.

The terms "comprises", "comprising", or any other variations thereof, are intended to cover a non-exclusive inclusion, such that a setup, device or method that comprises a list of components or steps does not include only those components or steps but may include other components or steps not expressly listed or inherent to such setup or device or method. In other words, one or more elements in a system or apparatus proceeded by "comprises... a" does not, without more constraints, preclude the existence of other elements or additional elements in the system or method.

The present disclosure relates to a method and system for debugging automotive applications in an Electronic Control Unit (ECU) of an automobile. The term "automobile" preferably refers to any vehicle having an ECU such as, but not limited to, a car, van, bus, coach, truck or motorcycle. A target debugging infrastructure, comprising a debug agent and a debug server, may be introduced as a part of the ECU. Extended ECU supplier diagnostics services may be used to communicate with debugging environment to debug one or more target automotive applications in the ECU. ECUs provide On-Board Diagnostics services to access vital data of the ECU. These services are normally Keyword 2000 (KWP2000, ISO 14230) or Unified Diagnostic Service (UDS, ISO 14229-1). In an embodiment, the ECU supplier diagnostics services are an extension of UDS and/or KWP2000, which may add further diagnostics capabilities to the ECU. The debug agent and the debug server may be implemented in the ECU such that both the debug agent and the debug server are accessible through an On-Board Diagnostic (OBD) connector associated with the ECU over an On-Board Diagnostics protocol and may use supplier diagnostics services. Further, an external computing system which is capable of translating diagnostics communication to and from the ECU may be set up in communication with the ECU using the OBD connector.

In an embodiment, the debug agent acts as an agent between the debug server in the ECU and a debugger in the external computing system. When the debugger in the external computing system requires debugging information, the debugger transmits a debug command, which is processed by debug command interpreter. This debug command may be converted and encoded to an ECU diagnostics service request and sent to the ECU over the On-Board Diagnostics protocol. Accordingly, the debug agent collects debugging information related to the one or more target automotive applications in the ECU in response to a request for collecting the debugging information. Further, the debug agent transmits the debugging information to the external computing system as the diagnostic response to a previously received diagnostics service request. The debugger on the external computing system, upon receiving the debugging information from the debug agent, may generate one or more debugging instructions corresponding to one or more debugging activities associated with the one or more target automotive applications. The one or more debugging instructions generated by the debugger are then transmitted to the debug agent over the ECU supplier diagnostics services. The above process may be repeated as long as the debugger in the external computing system continues to debug the ECU.

In an implementation, each of the debugging information transmitted by the debug agent and the one or more debugging instructions received from the external computing system and vice-versa may be in an encoded form. Hence, the debug agent decodes the one or more debugging instructions, before forwarding the one or more decoded debugging instructions to the debug server. Thereafter, the debug server executes each of the one or more decoded debugging instructions for performing the one or more debugging activities associated with the one or more target automotive applications, thereby debugging each of the one or more target automotive applications in the ECU. The method explained hereinabove eliminates the need for taking the ECU out of the automobile for debugging the ECU, since the debugging infrastructure implemented in the ECU and the debugger on the external computing system are made to communicate over the On-Board Diagnostic protocol (e.g. KWP2000/UDS). In an embodiment, other than KWP2000 and UDS, there may be one or more other Non-OBD protocols that may take advantage of the method disclosed hereinabove.

In the following detailed description of the embodiments of the disclosure, reference is made to the accompanying drawings that form a part hereof, and in which are shown by way of illustration specific embodiments in which the disclosure may be practiced. These embodiments are described in sufficient detail to enable those skilled in the art to practice the disclosure, and it is to be understood that other embodiments may be utilized and that changes may be made without departing from the scope of the present disclosure. The following description is, therefore, not to be taken in a limiting sense.

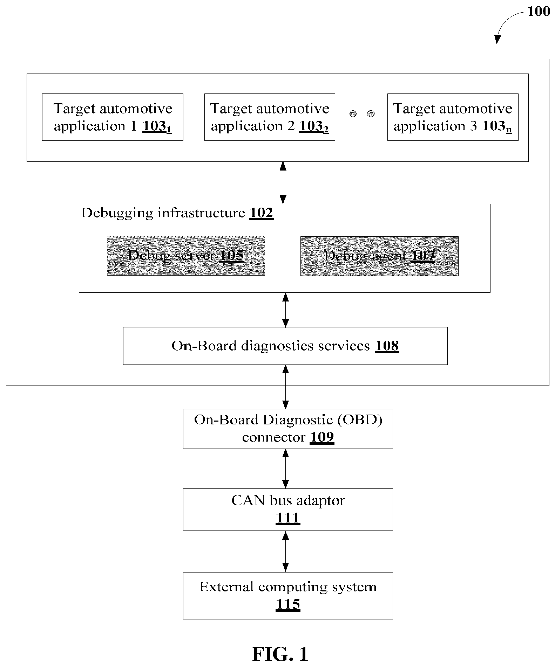

**FIG. 1** shows an exemplary environment **100** illustrating various components of an Electronic Control Unit (ECU) **101** of an automobile in accordance with some embodiments of the present disclosure.

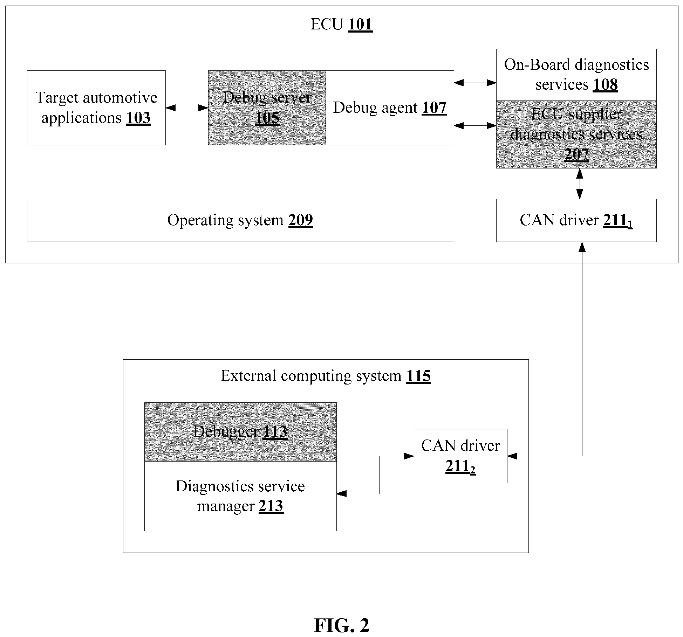

The environment **100** shows the ECU **101** of the automobile and an external computing system **115** which are connected using a CAN bus adaptor **111** interfaced between an On-Board Diagnostic (OBD) connector **109** associated with the ECU **101** and the external computing system **115**. The ECU **101** may comprise one or more target automotive applications **103**, target automotive application 1 **103₁** to target automotive application n **103ₙ** (collectively referred as target automotive applications **103**). In an embodiment, the one or more target automotive applications **103** are the automotive applications installed and configured on an Operating System (OS) **209** (shown in **FIG. 2**) of the ECU **101**. The one or more target automotive applications **103** need to be diagnosed and debugged by the debugging infrastructure **102**. The debugging infrastructure **102** includes the debug server **105** and the debug agent **107**. The debug agent **107** may act as a communication agent between the debug server **105** and the external computing system **115**.

In an embodiment, the debug agent **107** may be responsible for collecting debugging information related to the one or more target automotive applications **103** upon receiving a request for collecting the debugging information. The debug agent **107** utilizes capabilities of the debug server **105** to collect the debugging information. Then the debug agent **107** transmits the collected debugging information to the external computing system 115 over an On-Board diagnostics services **108** configured in the ECU **101** through the CAN bus adaptor **111**. In an embodiment, debug communication between the ECU **101** and the external computing system **115** may utilize both the On-Board diagnostics services **108** and the extended supplier diagnostics services (e.g. KWP2000/UDS) or one of the On-Board diagnostics services **108** and the extended supplier diagnostics services (e.g. KWP2000/UDS) depending on the capability of the diagnostics services present in the automobile. The external computing system **115** transmits one or more debugging instructions, in an encoded form so that the debug communication can be represented in a diagnostic communication, corresponding to one or more debugging activities associated with the one or more target automotive applications **103** based on the debugging information received from the debug agent **107**. In an example, the one or more debugging instructions may be encoded using a simple algorithm that uses 1 byte for each of the one or more debugging instructions and reserves subsequent 'n' bytes for auxiliary data. An exemplary representation of various instructions used for encoding the one or more debugging instructions is as following:

| | |
|---|---|
| SET BREAKPOINT | : 0xB0 <ADDRESS_BYTES> |
| CONTINUE/RUN | : 0xC0 |
| READ DATA | : 0x11l <ADDRESS_BYTES> |

Further, these instructions may be transmitted as supplier diagnostics services (that prefixes a byte 0xBE) or as a part of UDS Write Data By address.

Further, the one or more debugging activities may include, without limiting to, setting a breakpoint, reading and writing data into the memory of each of the one or more target automotive applications **103** etc. The debug agent **107** decodes each of the one or more debugging instructions received from the external computing system **115** for obtaining the one or more decoded debugging instructions. Thereafter, the debug agent **107** transmits the one or more decoded debugging instructions to the debug server **105**, using which the debug server **105** performs one or more debugging activities associated with the one or more target automotive applications **103** for debugging each of the one or more target automotive applications **103** in the ECU **101**.

**FIG. 2** shows a detailed block diagram illustrating communication between the ECU **101** and an external computing system **115** in accordance with some embodiments of the present disclosure.

In an embodiment, the debug agent **107** collects debugging information related to the one or more target automotive applications **103** upon receiving a request for collecting the debugging information. As an example, the request for collecting the debugging information may be initiated by a user associated with the external computing system **115**. In another implementation, the request for collecting the debugging information may be generated at one or more predetermined time intervals, as may be configured in the debug agent **107** when the debug agent **107** is being implemented in the ECU **101**. The debugging information is then transmitted to the external computing system **115** over the On-Board diagnostics services **108** and the associated supplier diagnostics services (referred as ECU supplier diagnostics services **207** hereinafter) configured in the ECU **101**. The On-Board diagnostics services **108** may be configured for including one or more services that support and facilitate debugging of the one or more target automotive applications **103** from the external computing system **115** over a set of ECU supplier diagnostics services **207**. In an implementation, a part of the ECU supplier diagnostics services **207** may be configured for encoding the debugging information before transmitting the debugging information to the external computing system **115**.

Thereafter, a debugger **113** implemented in the external computing system **115** uses the debugging information collected by the debug agent **107** for generating the one or more debugging instructions corresponding to the one or more debugging activities of the one or more target automotive applications **103**. In an embodiment, the external computing system **115** will utilize a diagnostics service manager **213**, which will be responsible for decoding the debugging information received from the debug agent **107**, and for encoding the one or more debugging instructions that have to be transmitted to the debug agent **107**. Further, the debug agent **107** decodes the one or more debugging instructions received from the external computing system **115** in order to generate the one or more decoded debugging instructions. Finally, the debug server **105** may execute each of the one or more decoded debugging instructions in the ECU **101** for performing one or more debugging activities associated with each of the one or more target automotive applications **103**.

In an embodiment, the debugging information collected by the debug agent **107** and the one or more debugging instructions provided by the external computing system **115** may be exchanged using a CAN driver **211₁** interfaced with the OBD connector **109** of the ECU **101** and a CAN driver **211₂** interfaced in the external computing system **115**.

In an embodiment, the debug agent **107** in the ECU **101** may be communicated by the external computing system **115** in one or more different ways. As an example, one such way of establishing communication between the external computing system **115** and the debug agent **107** in the ECU **101** may be achieved by exchanging one or more diagnostics commands between the debugger **113** implemented in the external computing system **115** and the ECU supplier diagnostics services **207** implemented in the ECU **101**.

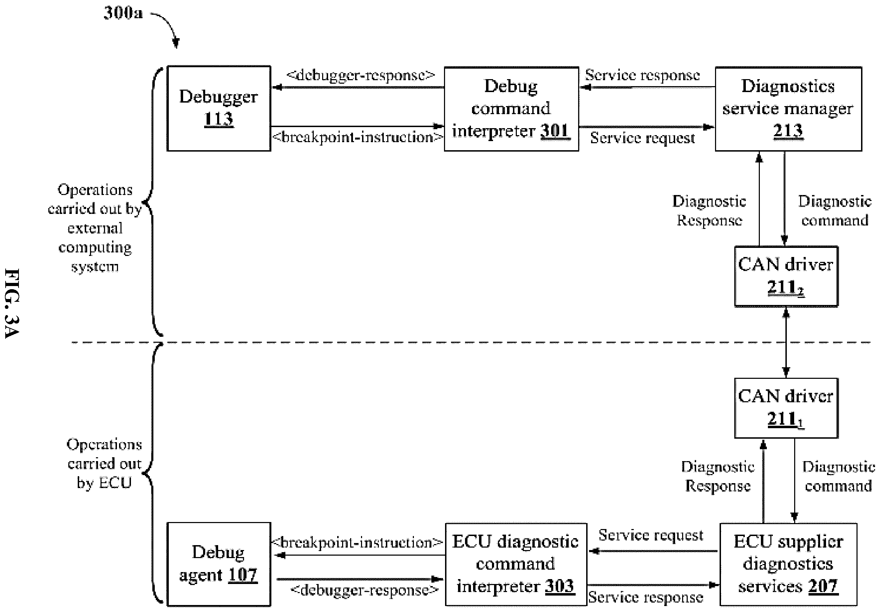

In an embodiment, as shown in method **300a** of **FIG. 3A** as a part of the diagnostic commands, the debugger **113** may determine and transmit a breakpoint address, on the memory of the one or more target automotive applications **103**, based on the debugging information received from the debug agent **107**. The breakpoint address may point at a particular location on the memory of the one or more target automotive applications **103**, where the execution of the one or more target automotive applications **103** has to be temporarily suspended in order to debug the one or more target automotive applications **103**.

In the above example, to set a breakpoint, the debugger **113** generates an exemplary machine interface command such as "*b - <breakpoint-address>*". Further, a debug command interpreter **301** implemented in the external computing system **115** may interpret the machine interface command generated by the debugger **113** and determines respective service requests to be issued to the debug agent **107**. Thereafter, the diagnostics service manager **213** implemented in the external computing system **115** generates a diagnostic command to be transmitted to the debug agent **107** based on the machine interface command, comprising the breakpoint address, and the service request determined by the debug command interpreter **301**. As an example, the diagnostic command generated by the diagnostics service manager **213** may be an exemplary Unified Diagnostic Service (UDS) command such as, *"[Service request ID 0xB0 <breakpoint-address>]",* indicating a 2 byte memory address and a diagnostics service ID along with the breakpoint address. The diagnostic command generated by the diagnostics service manager **213** may be in an encoded form and is transmitted to the ECU supplier diagnostics services **207** using the CAN driver **211₂** configured on the external computing system **115** and the CAN driver **211₁** configured on the ECU **101**.

In an embodiment, the ECU supplier diagnostics services **207** retrieves the service request from the diagnostic command received from the diagnostics service manager **213**. The retrieved service request is then passed on to an ECU diagnostic command interpreter **303** implemented on the ECU **101**, which may be responsible for interpreting the service request and identifying the original breakpoint address (as a machine interface command) generated by the debugger **113**. Further, the debug agent **107** decodes the machine interface command and forwards the decoded machine interface command to the debug server **105** in the ECU **101** (not shown in **FIG. 3A**). The debug server **105** executes the machine interface command, which is a breakpoint address in this example, and suspends the execution of the one or more target automotive applications **103** in order to debug the one or more target automotive applications **103** at a given breakpoint. In an embodiment, one or more responses such as, results of execution of the machine interface command may be transmitted back to the external computing system **115** using the same path of transmission (using the CAN driver **211₁** and **211₂)** using a similar method as explained hereinabove.

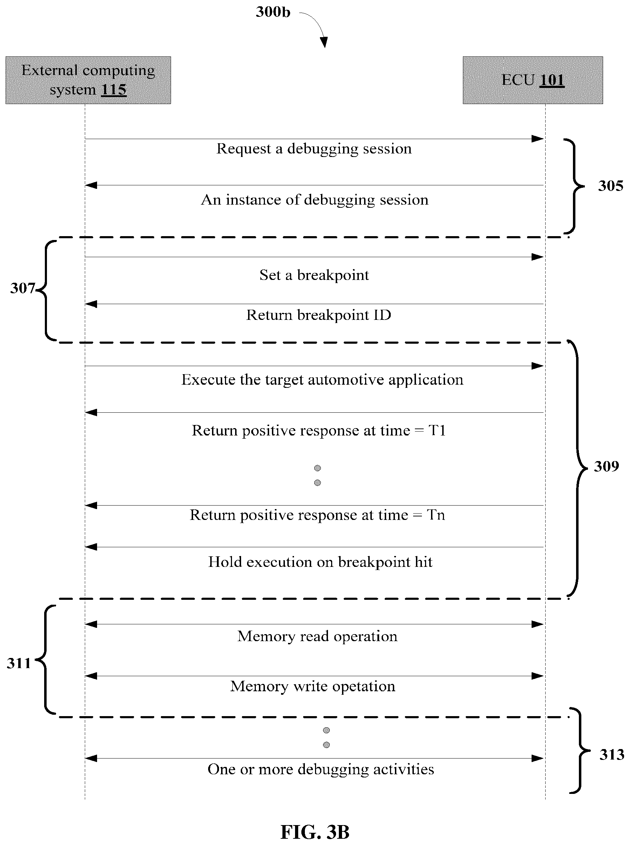

**FIG. 3B** illustrates a method of communication between the ECU **101** and the external computing system **115** for debugging the one or more target automotive applications **103** in the ECU **101**. In an implementation, the external computing system **115** and the debugging infrastructure **102** in ECU **101** may be connected over the CAN bus adaptor **111** interfaced between the OBD connector **109** associated with the ECU **101** and the external computing system **115**. Further, the external computing system **115** may use the diagnostics services such as UDS, for transmitting one or more diagnostic commands to the debug agent **107** in the ECU **101**. The debug agent **107** translates the one or more diagnostic commands received from the external computing system **115** into corresponding machine interface commands. The sequence of steps indicated by **300b** in **FIG. 3B** illustrate the method of issuing a breakpoint in a virtual address space of the one or more target automotive applications **103.**

At step **305,** the external computing system **115** transmits a diagnostic request to the debug agent **107** in the ECU **101.** Upon receiving the diagnostic request from the external computing system **115,** the ECU supplier diagnostics services **207** are initiated and the debug agent **107** transmits an instance of the running ECU supplier diagnostics services **207** to the external computing system **115**. The external computing system **115** then generates a diagnostic command such as, *"[Service request ID 0x20 <Target application - ID>]"* for initiating the debugging session in the ECU **101**. In an embodiment, the debug agent **107** may temporarily suspend the execution of the one or more target automotive applications **103** upon initiation of the debugging session.

At step **307**, the external computing system **115** may issue a breakpoint into the virtual address space of the one or more target automotive applications **103** that are being debugged in the ECU **101**. As an example, the external computing system **115** may issue an exemplary diagnostic command such as, *"[Service request ID 0xB0 <breakpoint-address>]"* for setting up the breakpoint. Thereafter, the one or more target automotive applications **103** may respond to the breakpoint request from the external computing system **115** by transmitting an 8-bit *"breakpoint-ID"* to the external computing system **115**. In an embodiment, the *"breakpoint-address"* may point to a location in the memory (or a virtual address space) of the one or more target automotive applications **103**, the memory location at which execution of the one or more target automotive applications **103** has to be monitored.

At step **309**, the external computing system **115** issues an exemplary command such as, *"Service request ID 0xC0"* which causes the one or more target automotive applications **103** to continue their execution until the breakpoint is reached. In an embodiment, the debug agent **107** may notify the execution status of each of the one or more target automotive applications **103** to the external computing system **115** until the breakpoint is reached. In an example, the debug agent **107** may transmit one or more periodic notifications to the external computing system **115** at one or more predetermined time intervals, time interval T1 to time interval Tn as indicated in FIG. 3B. For example, the one or more periodic notifications may be transmitted after completion of each seconds of execution of the one or more target automotive applications **103**. Further, the debug agent **107** transmits a notification to the external computing system **115** when the breakpoint is reached and/or when the one or more target automotive applications **103** complete their execution.

At step **311**, the external computing system **115** may perform one or more modifications in the memory of the one or more target automotive applications **103** for debugging the one or more target automotive applications **103**. Initially, the external computing system **115** may read data and variables in a memory of the one or more target automotive applications **103** by using an exemplary command such as, *"Service request ID 0x11 <4 - byte memory address> <1 - byte size>",* indicating the exact memory location which has to be referred. Similarly, the external computing system **115** may issue an exemplary command such as, *"Service request ID 0x12 <4 - byte memory address> <1-byte size> <payload data>",* wherein the *"payload data"* field comprises one or more data and/or variables to be updated in the corresponding memory location of the one or more target automotive applications **103**. In an implementation, maximum size of the *"payload data"* field may be 16 - byte or longer.

In an embodiment, each of the commands being exchanged between the external computing system **115** and the ECU **101** are in an encoded form. Further, the one or more commands illustrated in the present disclosure are exemplary and may change depending on the implementation of the diagnostics services in the ECU **101**.

At step **313** the ECU supplier diagnostics services **207** may be further extended to support additional debug features and to perform one or more additional debugging activities on each of the one or more target automotive applications **103**. As an example, a debug session management may be introduced into the debug server **105** on the ECU **101** for enabling the debug server **105** to debug the one or more target automotive applications **103** inside the ECU **101**.

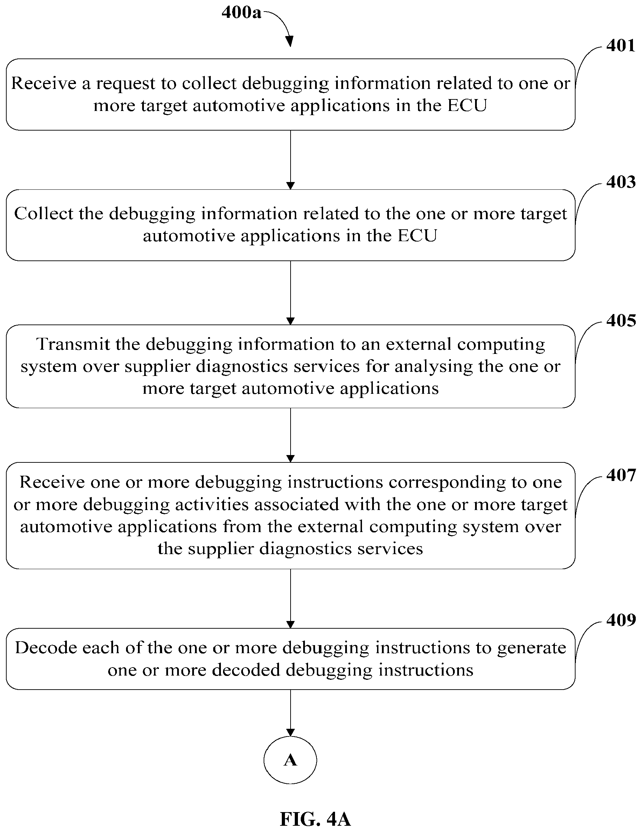

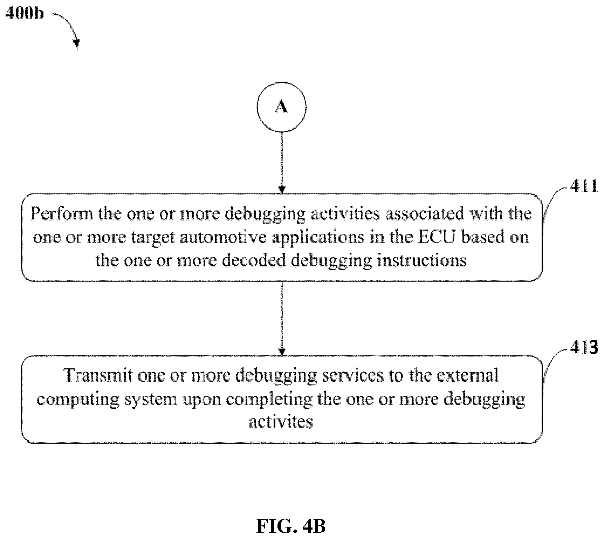

**FIGS. 4A** and **4B** show a flowchart illustrating a method for debugging one or more automotive applications in the ECU **101** of the automobile in accordance with some embodiments of the present disclosure.

As illustrated in **FIG. 4A****,** the methods **400a** and **400b** comprise one or more blocks for debugging the one or more target automotive applications **103** in the ECU **101** of the automobile using the debug server **105** and the debug agent **107** in the debugging infrastructure **102.** The method **400a** and **400b** may be described in the general context of computer executable instructions. Generally, computer executable instructions can include routines, programs, objects, components, data structures, procedures, modules, and functions, which perform particular functions or implement particular abstract data types.

The order in which the methods **400a** and **400b** are described is not intended to be construed as a limitation, and any number of the described method blocks can be combined in any order to implement the method. Additionally, individual blocks may be deleted from the methods without departing from the scope of the subject matter described herein. Furthermore, the method can be implemented in any suitable hardware, software, firmware, or combination thereof.

Accordingly, the method **400a** illustrates one or more operations performed by the debug agent **107** implemented in the ECU **101.** At block **401,** the debug agent **107** receives a request for collecting debugging information related to one or more target automotive applications **103** in the ECU **101.** The debug agent **107** may be accessed over an On-board Diagnostic (OBD) service. In an embodiment, the debug agent **107** communicates with a debugger **113** implemented in the external computing system **115** using a Controller Area Network (CAN) bus adaptor **111.** The CAN bus adaptor **111** is interfaced between an OBD connector **109** associated with the ECU **101** and the external computing system **115.**

At **block 403,** the debug agent **107** collects the debugging information related to the one or more target automotive applications **103** in the ECU **101.** In an embodiment, the debugging information collected by the debug agent **107** comprises at least one of internal state information, one or more state variables, program counter and stack information.

At **block 405,** the debug agent **107** transmits the debugging information to an external computing system **115** over ECU supplier diagnostics services **207** for analyzing the one or more target automotive applications **103.** The debugging information transmitted by the debug agent **107** is in an encoded form. In an embodiment, the ECU supplier diagnostics services **207** is configured for providing services for debugging support from the external computing unit by facilitating execution of a debug session.

At **block 407,** the debug agent **107** receives one or more debugging instructions corresponding to one or more debugging activities associated with the one or more target automotive applications **103** from the external computing system **115** over the ECU supplier diagnostics services **207.** The one or more debugging instructions received from the external computing system **115** are in an encoded form. In an embodiment, the debug agent **107** also receives data associated with the one or more debugging instructions, wherein the data is utilized by the debug server **105** in the ECU **101** for performing the one or more debugging activities. As an example, the one or more debugging activities includes at least one of setting a breakpoint, reading and writing data into memory of each of the one or more target automotive applications **103.**

At **block 409,** the debug agent **107** decodes each of the one or more debugging instructions for generating one or more decoded debugging instructions **103.** The one or more decoded debugging instructions are used by the debug server **105** for performing the one or more debugging activities on the one or more target automotive applications **103.**

At **block 411** of the method **400b,** the debug server **105** in the ECU **101** performs the one or more debugging activities associated with the one or more target automotive applications **103** in the ECU **101** based on the one or more decoded debugging instructions. The debug server **105** is capable of debugging each of the one or more target automotive applications **103** in each of one or more phases of production of the automobile including at least one of a pre-production phase and post-production phase. Debugging each of the one or more target automotive applications **103** may further comprise modifying memory of each of the one or more target automotive applications **103** for debugging the ECU **101.**

At **block 413,** the debug server **105** may transmit, through the debug agent **107,** one or more debugging responses to the external computing system **115** upon completing the one or more debugging activities associated with the one or more target automotive applications **103** in the ECU **101.** As an example, the one or more debugging responses received from the debug server **105** may include, without limiting to, results of execution of the one or more debugging instructions. Hence, each of the one or more target automotive applications **103** may be diagnosed and debugged by performing the steps indicated by the methods **400a** and **400b.**

### Computer System

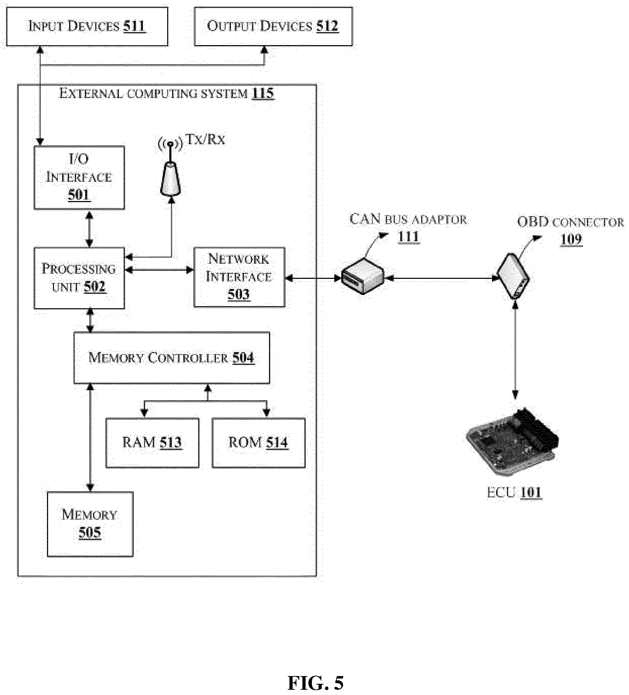

**FIG. 5** illustrates a block diagram of the external computer system **115** in accordance with various embodiments consistent with the present disclosure. In an embodiment, the external computing system **115** and the ECU **101** may be connected over the CAN bus adaptor **111** interfaced between the OBD connector **109** associated with the ECU **101** and the external computing system **115.** Further, the external computing system **115** may use the diagnostics services such as UDS, for transmitting one or more diagnostic commands to the debug agent **107** in the ECU **101** through the OBD connector 109. The external computing system **115** comprises a central processing unit ("CPU" or "processor") **502.** The processing unit **502** may comprise at least one data processor for executing program components for executing user- or system-generated business processes. A user may include a person, a person using a device such as such as those included in this invention, or such a device itself. The processing unit **502** may include specialized processing units such as integrated system (bus) controllers, memory management control units, floating point units, graphics processing units, digital signal processing units, etc.

The processing unit **502** may be disposed in communication with one or more input/output (I/O) devices (**511** and **512**) via I/O interface **501.** The I/O interface **501** may employ communication protocols/methods such as, without limitation, audio, analog, digital, stereo, IEEE-1394, serial bus, Universal Serial Bus (USB), infrared, PS/2, BNC, coaxial, component, composite, Digital Visual Interface (DVI), high-definition multimedia interface (HDMI), Radio Frequency (RF) antennas, S-Video, Video Graphics Array (VGA), IEEE 802.n /b/g/n/x, Bluetooth, cellular (e.g., Code-Division Multiple Access (CDMA), High-Speed Packet Access (HSPA+), Global System For Mobile Communications (GSM), Long-Term Evolution (LTE) or the like), etc.

Using the I/O interface **501,** the external computing system **115** may communicate with one or more I/O devices (**511** and **512**).

In some embodiments, the processing unit **502** may be disposed in communication with the ODB connector **109** via a network interface **503.** The network interface **503** may employ connection protocols including, without limitation, direct connect, Ethernet (e.g., twisted pair 10/100/1000 Base T), Transmission Control Protocol/Internet Protocol (TCP/IP), token ring, IEEE 802.11a/b/g/n/x, etc. The ECU **101** may communicate with the external computing system **115** through the CAN bus adaptor **111** using the network interface **503.**

In some embodiments, the processing unit **502** may be disposed in communication with a memory **505** (e.g., RAM **513,** ROM **514,** etc. as shown in **FIG. 5**) via a memory controller **504.** Further, the memory controller **504** may connect to the memory **505** including, without limitation, memory drives, removable disc drives, etc., employing connection protocols such as Serial Advanced Technology Attachment (SATA), Integrated Drive Electronics (IDE), IEEE-1394, Universal Serial Bus (USB), fiber channel, Small Computer Systems Interface (SCSI), etc. The memory drives may further include a drum, magnetic disc drive, magneto-optical drive, optical drive, Redundant Array of Independent Discs (RAID), solid-state memory devices, solid-state drives, etc.

Furthermore, one or more computer-readable storage media may be utilized in implementing embodiments consistent with the present invention. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., non-transitory. Examples include Random Access Memory (RAM), Read-Only Memory (ROM), volatile memory, nonvolatile memory, hard drives, Compact Disc (CD) ROMs, Digital Video Disc (DVDs), flash drives, disks, and any other known physical storage media.

Advantages of embodiments of the present disclosure are described in the following paragraphs.

In an embodiment, the present disclosure provides a method for diagnosing an ECU in an automobile during various stages of production of the automobile.

In an embodiment, the present disclosure provides a method of performing an On-board diagnostics of the ECU and the one or more automotive applications in the ECU, without taking the ECU out of the automobile.

In an embodiment, the method of present disclosure eliminates a need for halting the production assembly of the automobiles during diagnostics of automobiles.

In an embodiment, the present disclosure provides a method for performing a direct diagnostics of one or more target automotive applications in the ECU through an external computing system.

In an embodiment, the method of present disclosure directs one or more issues in the target automotive applications of the ECU to the concerned testing teams, thereby eliminating the delay and incorrect diagnostics of the one or more target automotive applications.

The terms "an embodiment", "embodiment", "embodiments", "the embodiment", "the embodiments", "one or more embodiments", "some embodiments", and "one embodiment" mean "one or more (but not all) embodiments of the invention(s)" unless expressly specified otherwise.

The terms "including", "comprising", "having" and variations thereof mean "including but not limited to", unless expressly specified otherwise.

The enumerated listing of items does not imply that any or all of the items are mutually exclusive, unless expressly specified otherwise.

The terms "a", "an" and "the" mean "one or more", unless expressly specified otherwise.

A description of an embodiment with several components in communication with each other does not imply that all such components are required. On the contrary a variety of optional components are described to illustrate the wide variety of possible embodiments of the invention.

When a single device or article is described herein, it will be readily apparent that more than one device/article (whether or not they cooperate) may be used in place of a single device/article. Similarly, where more than one device or article is described herein (whether or not they cooperate), it will be readily apparent that a single device/article may be used in place of the more than one device or article or a different number of devices/articles may be used instead of the shown number of devices or programs. The functionality and/or the features of a device may be alternatively embodied by one or more other devices which are not explicitly described as having such functionality/features. Thus, other embodiments of the invention need not include the device itself.

Finally, the language used in the specification has been principally selected for readability and instructional purposes, and it may not have been selected to delineate or circumscribe the inventive subject matter. It is therefore intended that the scope of the invention be limited not by this detailed description, but rather by any claims that issue on an application based here on. Accordingly, the embodiments of the present invention are intended to be illustrative, but not limiting, of the scope of the invention, which is set forth in the following claims.

While various aspects and embodiments have been disclosed herein, other aspects and embodiments will be apparent to those skilled in the art. The various aspects and embodiments disclosed herein are for purposes of illustration and are not intended to be limiting, with the true scope being indicated by the following claims.

## Claims

1. A method for debugging automotive applications in an Electronic Control Unit (ECU) (101) of an automobile, the method comprising:
receiving, by a debug agent (107), a request for collecting debugging information related to one or more target automotive applications (103) in the ECU (101), wherein the debug agent (107) is implemented within the ECU (101), and wherein the debug agent (107) is accessible over an On-board Diagnostic (OBD) service;
collecting, by the debug agent (107), the debugging information related to the one or more target automotive applications (103) in the ECU (101);
transmitting, by the debug agent (107), the debugging information to an external computing system (115) over supplier diagnostics services (207) for analyzing the one or more target automotive applications (103), wherein the debugging information is in an encoded form;
receiving, by the debug agent (107), one or more debugging instructions corresponding to one or more debugging activities associated with the one or more target automotive applications (103) from the external computing system (115) over the supplier diagnostics services (207), wherein the one or more debugging instructions are in an encoded form; and
decoding, by the debug agent (107), each of the one or more debugging instructions for generating one or more decoded debugging instructions; and
performing, by a debug server (105) in the ECU (101), the one or more debugging activities associated with the one or more target automotive applications (103) in the ECU (101) based on the one or more decoded debugging instructions.

2. The method as claimed in claim 1, further comprising receiving, by the debug agent (107), data associated with the one or more debugging instructions, wherein the data is utilized by the debug server (105) in the ECU (101) for performing the one or more debugging activities.

3. The method as claimed in claim 1 or claim 2, wherein the supplier diagnostic service (207) is configured for including services for debugging support from the external computing unit by facilitating execution of a debug session with a firmware installed within the ECU (101) of the automobile.

4. The method as claimed in any of the preceding claims, wherein the debugging information comprises at least one of internal state information, one or more state variables, program counter and stack information.

5. The method as claimed in any of the preceding claims, wherein the one or more debugging activities includes at least one of setting a breakpoint, reading and writing data into memory of each of the one or more target automotive applications (103).

6. The method as claimed in any of the preceding claims, wherein the debug agent (107) communicates with a debugger (113) implemented in the external computing system (115) using a Controller Area Network (CAN) bus adaptor (111).

7. The method as claimed in claim 6, wherein the CAN bus adaptor (111) is interfaced between an OBD connector (109) associated with the ECU (101) and the external computing system (115).

8. The method as claimed in any of the preceding claims, wherein the external computing system (115) receives one or more debugging responses from the debug server (105) in the ECU (101).

9. The method as claimed in any of the preceding claims, further comprises modifying memory of each of the one or more target automotive applications (103) for debugging the ECU (101).

10. The method as claimed in any of the preceding claims, wherein the debug server (105) is capable of debugging each of the one or more target automotive applications (103) in each of one or more phases of production of the automobile including at least one of a pre-production phase and post-production phase.

11. The method as claimed in any of the preceding claims, further comprising debugging each of the one or more target automotive applications (103) in each of one or more phases of production of the automobile including at least one of a pre-production phase and post-production phase.

12. A debugging infrastructure (102) for debugging automotive applications in an Electronic Control Unit (ECU) (101) of an automobile, the debugging infrastructure (102) comprising:
a processing unit (117); and
a memory (119) communicatively coupled to the processing unit (117), wherein the memory (119) stores executable instructions, which, on execution causes the processing unit (117) to:
receive a request to collect debugging information related to one or more target automotive applications (103) in the ECU (101);
collect the debugging information related to the one or more target automotive applications (103) in the ECU (101);
transmit the debugging information to an external computing system (115) over supplier diagnostics services (207) for analyzing the one or more target automotive applications (103), wherein the debugging information is in an encoded form;
receive one or more debugging instructions corresponding to one or more debugging activities associated with the one or more target automotive applications (103) from the external computing system (115) over the supplier diagnostics services (207), wherein the one or more debugging instructions are in an encoded form;
decode each of the one or more debugging instructions to generate one or more decoded debugging instructions; and
execute one or more debugging activities associated with the one or more target automotive applications (103) in the ECU (101) based on the one or more decoded debugging instructions.

13. The debugging infrastructure (102) as claimed in claim 12, wherein the instructions, on execution, further cause the processing unit (117) to perform the method of any of claims 1 to 11.

14. A processor-readable medium comprising instructions which, when executed by one or more processors, cause the one or more processors to perform a method as claimed in any of claims 1 to 11.
